**Europäisches Patentamt**

**European Patent Office**

**Office européen des brevets**

(19)

(11) Veröffentlichungsnummer: **0 277 086 B1**

# EUROPÄISCHE PATENTSCHRIFT

(12)

(45) Veröffentlichungstag der Patentschrift:
10.04.91 Patentblatt 91/15

(51) Int. Cl.$^5$: **B65G 47/08**, B21D 43/00, B23Q 7/00

(21) Anmeldenummer: **88730004.4**

(22) Anmeldetag: **07.01.88**

(54) Verfahren und Einrichtung zum Manipulieren von kleinkalibrigen Rohren.

(30) Priorität: 21.01.87 DE 3701556

(43) Veröffentlichungstag der Anmeldung:
03.08.88 Patentblatt 88/31

(45) Bekanntmachung des Hinweises auf die
Patenterteilung:
10.04.91 Patentblatt 91/15

(84) Benannte Vertragsstaaten:
AT BE DE ES FR GB IT NL SE

(56) Entgegenhaltungen:
AT-B- 361 848
DE-A- 3 438 123
DE-C- 350 609
FR-A- 2 277 750
GB-A- 1 085 734
US-A- 3 983 986
DE-Z "automatik", Mai 1971, Seite 158 ff, Bild
11

(73) Patentinhaber: BUNDY GmbH
Postfach 10 39 40
W-6900 Heidelberg (DE)

(72) Erfinder: Dietzel, Hans-Ulrich, Dipl.-Ing.
Parkring 63
W-6837 St. Leon-Rot (DE)
Erfinder: Dolch, Gernot, Ing. (grad.)
Lahrer Strasse 4
W-6900 Heidelberg (DE)
Erfinder: Müffke, Walter, Dipl.-Ing.
Silcherstrasse 3
W-6901 Wiesenbach (DE)

(74) Vertreter: Gornott, Dietmar, Dipl.-Ing.
Zilleweg 29
W-6100 Darmstadt 12 (DE)

## Beschreibung

Die Erfindung betrifft ein Verfahren und eine Einrichtung zum Manipulieren von kleinkalibrigen Rohren, insbesondere von Rohren mit jeweils an den Enden befindlichen bzw. aufzubringenden Verdickungen (wie z. B. Rohrverbindungsmuttern), bei dem Bündel von Rohren quer angefördert und die Rohre achsparallel auf einen festen Abstand kontinuierlich vereinzelt werden, und betrifft außerdem eine Fertigungseinrichtung, insbesondere für Brems-, Kraftstoff- oder Hydraulikleitungen.

Brems-, Kraftstoff- und Hydraulikleitungen werden üblicherweise in Einzelstücken seit vielen Jahren in aufeinanderfolgenden, örtlich jedoch getrennten Vorrichtungen weiterbehandelt und anschließend in Bunden von 40 bis 100 Stück an den Verbraucher geliefert bzw. zur Weiterverarbeitung gebracht. Nachteilig dabei ist es, daß innerhalb der Fertigung (z. B. in Kisten und auf Ablagen) oder beim Transport, Beschädigungen und unerwünschte Lagen, d. h. Raumverluste auftreten. Die Beschädigungen an der Oberfläche wirken sich auf die besonders aufwendig aufgebrachten Korrosionsschutzschichten aus. Es können sogar Verformungen der geraden oder schon vorgebogenen Leitungen auftreten.

Da solche Leitungsbündel als ganze Bunde schwer zu handhaben sind, treten diese Beschädigungen auch schon vor dem Versand auf. Die Leitungsbündel müssen aber beim Empfänger auch wieder in Einzelstücke aufgelöst werden. Die meisten dieser Schwierigkeiten entstehen deshalb, weil die Leitungen an ihren Enden mit Verdickungen versehen sind, die zum einen aus Schutzkappen für das vorbearbeitete Rohrende (entgrateter Locheingang, entgrateter Außendurchmesser) bestehen und zum anderen aus bereits aufgebrachten Verdickungen, wie z. B. den Rohrverbindungsmuttern oder diesen zugeordneten Bördelrändern. Die Brems-, Kraftstoff- und Hydraulikleitungen sind daher in der Regel an den Enden nicht im Durchmesser einheitlich.

Das eingangs bezeichnete Verfahren ist aus DE-Z "automatik", Mai 1971, Seite 158 ff., Bild 11 bekannt, wonach runde Körper achsparallel auf einen festen Abstand kontinuierlich vereinzelt werden. Das Vereinzeln erfolgt durch ein kreisförmiges Bewegen einer runden Vorrichtung mit am Umfang in Teilabständen vorgesehenen Aufnahmemulden. Der feste Abstand beim Vereinzeln wird dadurch erreicht, daß die bekannte Vorrichtung die Aufnahmemulden am Umfang in gleichen Abständen aufweist. Bei senkrechter Lage einer solchen Aufnahmemulde kann die Vereinzelung wieder aufgehoben werden. Hierbei handelt es sich um ein grundsätzliches Verfahren für Zuteileinrichtungen, die auf dem vorliegenden Gebiet jedoch nicht alle einschlägigen Aufgaben lösen können.

Der Erfindung liegt daher die Aufgabe zugrunde, wegen der uneinheitlichen Enden-Durchmesser während der Fertigung und während des Transports innerhalb und außerhalb sowie zwischen zwei Werken Beschädigungen der Rohre auszuschließen und gleichzeitig eine für die Fertigung und den Transport vorteilhaftere Handhabung vorzuschlagen.

Die gestellte Aufgabe wird bei dem erfindungsgemäßen Verfahren dadurch gelöst, daß danach jedes Rohr auf einer wandernden Unterlage während der senkrecht zur Rohrachse stattfindenden kontinuierlichen Bewegung mit dem benachbarten oder mit einem entfernteren Rohr in paralleler Achslage mit wieder lösbaren Gelenkgliedern, deren Länge jeweils dem festgelegten Abstand entspricht, verbunden wird und daß die aus den Rohren und den Gelenkgliedern bestehende Rohrmatte kontinuierlich abgezogen wird.

Diese Rohrmatte hält die Einzelrohre während der Fertigung und während des Transports auf Abstand und vermeidet somit Beschädigungen und erspart gleichzeitig ein mehrfaches Aufnehmen, in Positionbringen und Wiederablegen der einzelnen Rohre.

Die Einrichtung zur Durchführung des Verfahrens ist dahingehend ausgestaltet, daß eine Aufnahme für zumindest ein Bündel aus losen Rohren vorgesehen ist, daß sich senkrecht zur Längsachse des Bündels eine Vereinzelungsvorrichtung mit auf feste Teilungsabstände eingestellten Vereinzelungselementen anschließt, daß über einer die vereinzelten Rohre weitertransportierenden Unterlage zumindest eine Zuführvorrichtung und eine Eindrückvorrichtung für eine Vielzahl von wieder lösbaren Gelenkgliedern zur Bildung einer Rohrmatte angeordnet sind.

Eine solche Einrichtung kann automatisch beschickt werden und arbeitet selbst automatisiert, so daß beliebig lange Rohrmatten erzeugt werden können. Die Gelenkglieder sind außerdem unbeschränkt verwendbar und können daher immer wieder der Rohrmatten-Einrichtung zugeführt werden.

Die Erfindung gestattet ferner die Anwendung einer aus einzelnen kleinkalibrigen Rohren mit oder ohne Rohrverschraubungen und mittels Gelenkgliedern nach dem erfindungsgemäßen Verfahren gebildeten Rohrmatte, die zu einem zusammenhängenden Bund aufgewickelt ist, für den Transport zu Weiterverarbeitungseinrichtungen. Solche Rohrmatten-Wickelbunde können für den Transport und für eine Weiterverarbeitung vorteilhaft sein, wobei das Transportmittel und die Weiterverarbeitung auf entsprechende Rohrmatten-Wickelbund-Durchmesser oder umgekehrt abgestimmt werden können.

Beschädigungen und Transportprobleme werden ferner dadurch vermieden, indem nach einem weiteren Lösungsvorschlag längs einer Fertigungslinie, in der eine nach dem Verfahren gemäß Anspruch 1 gebildete, gerade Rohrstücke aufweisende Rohrmatte in gestreckter Lage geführt ist, den Rohrenden zugewendet Fertigungsstationen in einem Vielfachen von Teilungsabständen von zumindest einem vollen Teilungsabstand aufeinanderfolgender Rohre angeordnet sind und daß die Rohrmatte in Schritten der Teilungsabschnitte taktweise bewegbar ist. Diese Fertigungseinrichtung erhöht zusätzlich die Erzeugungsleistung an derartigen Produkten.

In Ausgestaltung dieser Lehre wird vorgeschlagen, daß Fertigungsstationen für ein Anphasen der Rohrenden und/oder für ein Entgraten der Rohrenden und/oder für ein Aufschieben von Rohrverbindungsmuttern und/oder für ein Anböreln und/oder für ein Bürsten der Rohrenden und/oder für ein Prüfen der Rohre vorgesehen sind. Damit werden die wesentlichen Behandlungsvorgänge erfaßt, um ein zumindest teilweise fertiges Leitungsrohr herzustellen, das noch zu Rohrmatten bzw. Wickelbunden verarbeitet werden kann.

Weiterhin wird für diese Erfindungsalternative vorgeschlagen, daß eine Fertigungsstation für das Biegen der vereinzelten Rohre vorgesehen ist. Das Biegen wird im wesentlichen als letzter Arbeitsgang vor der Montage des Leitungsrohres am Kraftfahrzeug eingesetzt.

Für eine durchgehende Fertigung der Rohre bis zur Montagereife in einem Automobil ist noch vorteilhaft, daß eine Fertigungsstation für das Abwickeln der Rohrmatte von einem Bund und eine Abdrückvorrichtung für das Entfernen der Gelenkglieder in vertikaler Richtung vorgesehen ist.

Je nachdem, ob die Rohre noch in der Fertigung benötigt werden oder ob sie schon einer Montage zugeführt werden, wird für die erste Phase vorgeschlagen, daß die Gelenkglieder aus Leichtwerkstoffen hergestellte Bügel bilden, die entsprechend dem Fertigungs-Teilungsabstand der vereinzelten Rohre Klemmbackenpaare für das Rohraußenkaliber aufweisen, die mittels eines dünnen, elastischen Steges miteinander verbunden sind.

Demgegenüber ergeben sich für den Transport, d.h. für eine raumgerechte Verwendung in Rohrmatten-Schichten oder für Rohrmatten-Wickelbunde Vorteile, indem die Gelenkglieder aus Leichtwerkstoffen hergestellte Bügel bilden, die entsprechend einem Transport-Teilungsabstand der vereinzelten Rohre Klemmbackenpaare für das Rohraußenkaliber aufweisen, die mittels eines etwa trapezförmigen, dünnen, elastischen Steges miteinander verbunden sind.

Ausführungsbeispiele der Erfindung sind in der Zeichnung schematisch dargestellt und werden nachfolgend erläutert. Es zeigen :

Fig. 1 eine Seitenansicht der Einrichtung zum Manipulieren von kleinkalibrigen Rohren,
Fig. 2 die in der Einrichtung gemäß Fig. 1 gebildete Rohrmatte von oben gesehen, mit Fertigungsstationen einer Fertigungslinie und
Fig. 3 einen gewickelten Rohrmattenbund von der Seite gesehen

Fig. 4 eine Draufsicht auf den Ausschnitt einer Rohrmatte, in der die Rohre mit einem Fertigungs-Teilungsabstand angeordnet sind und
Fig. 5 eine Draufsicht auf die Rohrmatte, wie Fig. 4, jedoch mit einem Transport-Teilungsabstand.

Das Manipulieren von kleinkalibrigen Rohren, die oft aus Stahl mit mehreren die Korrosion hemmenden Schutzschichten bestehen, oder je nach Verwendungszweck (z.B. als Kraftstoff-, Brems- oder Hydraulikleitungen) aus Kunststoffen hergestellt sind, hängt von der Länge, den vorgesehenen Biegungen und Anschlußmitteln ab, die eine Rohrenden-Bearbeitung vorsehen, wobei z.B. auch Verdickungen des Rohrendes erforderlich werden. Dementsprechend sind derartige Rohrstücke (bzw. kurz Rohre 1 genannt) unhandlich und schwierig zu transportieren. Hierbei ist der Transport innerhalb eines Werkes zwischen Fertigungsstationen oder außerhalb eines Werkes zwischen entferntliegenden Werken zu verstehen.

Die Rohre 1 werden in Bündeln 2 in eine Aufnahme 3 gelegt und von dort aus über eine Magazinzuführung 4 einer Vereinzelungsvorrichtung 5 zugeleitet, die die Rohre 1 in einen festen Teilungsabstand 6 bringt. Als Vereinzelungsvorrichtung 5 dient hier ein Magazinrad 7, das in den gleichen Teilungsabständen 6 jeweils Vereinzelungselemente 8 in Form einer Mulde für ein Rohr 1 vorsieht. Als Vereinzelungsvorrichtung könnten auch (nicht gezeigte) Kettenpaare mit Kettenrädern dienen, die die Rohre 1 mittels im Abstand der Kettengelenke angeordneten Halter als Vereinzelungselemente 8 aufnehmen würden.

Die Rohre 1 wandern aufeinanderfolgend senkrecht zur Rohrachse 1a, d.h. in Querrichtung 9 auf einer kontinuierlich bewegten Unterlage 10 und gelangen in gleichen Teilungsabständen 6 durch eine Fertigungsstraße, die beliebige Einrichtungen zum Behandeln der Rohrenden 1b aufweisen kann.

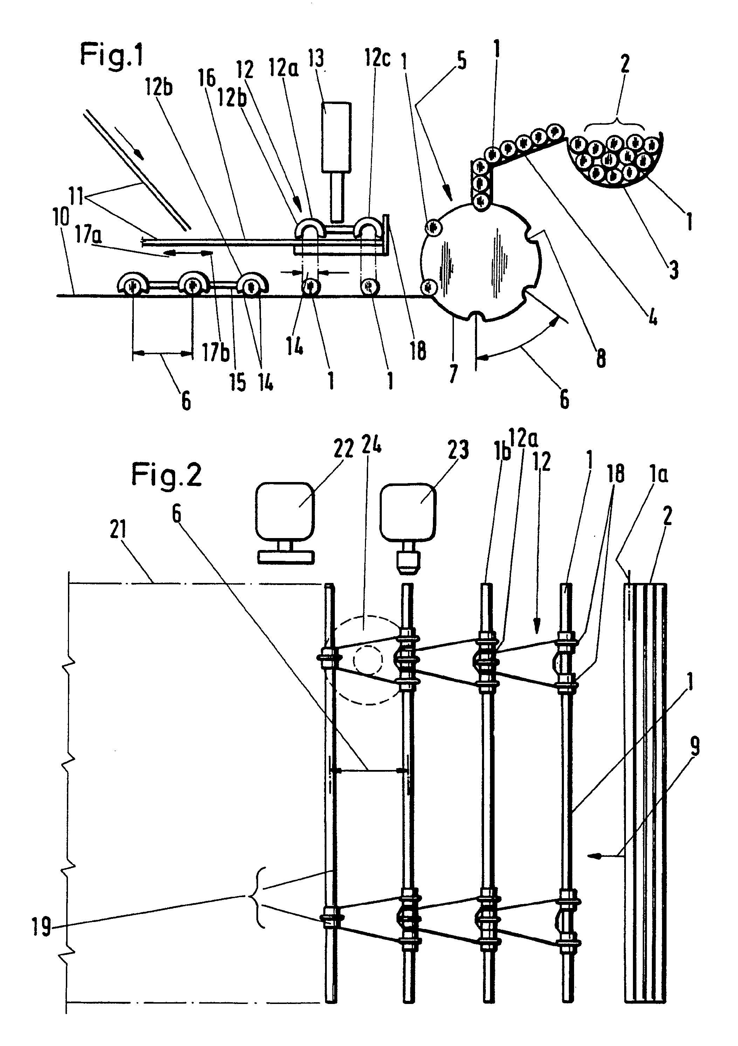

Zunächst sind im Ausführungsbeispiel der Fig. 1 eine Zuführvorrichtung 11 für einzelne Gelenkglieder 12 sowie eine Eindrückvorrichtung 13 vorgesehen. Die Gelenkglieder 12 bilden aus Leichtwerkstoffen, wie Kunststoff oder Aluminiumlegierungen hergestellte Bügel 12a, die entsprechend dem Teilungsabstand 6 der vereinzelten Rohre 1 beabstandete Klemmbackenpaare 12b und 12c besitzen, die auf das Rohraußenkaliber 14 abgestimmt sind, wobei durch die Ausbildung eine Federkraft entsteht, mit deren Wirkung die Rohre 1 ausreichend fest umfaßt werden können, jedoch auch ein Lösen der Gelenkglieder 12 möglich machen. Die Gelenkglieder 12 umfassen mit den Klemmbackenpaaren 12b und 12c entweder benachbarte Rohre 1 oder entfernere ; die Wahl der Länge eines Steges 15 wird daher durch das Xfache des Teilungsabstandes 6 bestimmt. Die Zufuhr der Gelenkglieder 12 erfolgt über hin- und hergehende Bewegungen eines Magazinschiebers 16 in den Richtungen 17a and 17b gegen einen Anschlag 18.

Die Ausbildung der Klemmbackenpaare 12a, 12b ergibt sich außerdem aus Fig. 2, die eine einseitige Gabelform 18 zeigt. Bei fortschreitender Bewegung in Querrichtung 9 wird damit eine Rohrmatte 19 erzeugt, die kontinuierlich abgezogen werden kann.

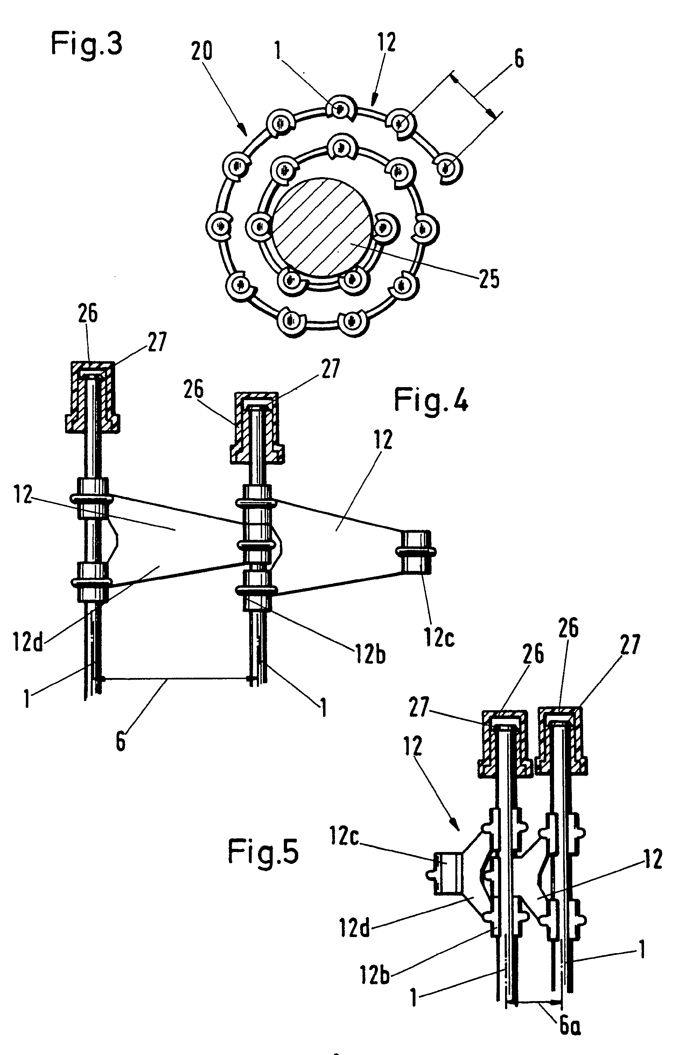

Diese Rohrmatte 19 kann nunmehr fertige, halbfertige oder auch nur abgelängte, gerade Rohre 1 enthalten. Die Rohrmatte 19 kann demgemäß als Vorbereitung für einen Transport zwischen zwei Fertigungslinien, als vorteilhafte Vorbereitung für weitere Fertigungsschritte oder als Vorbereitung für den Transport zwischen entferntliegenden Werken verstanden werden. Eine Transportform der Rohrmatte 19 besteht in einem gewickelten Bund 20 (Fig. 3). Der Bund 20 oder auch die flach ausgestreckte Rohrmatte 19 können in einer Fertigungseinrichtung (Fig. 2) entsprechend behandelt werden. Hierzu ist eine Fertigungslinie 21 angedeutet. Den Rohrenden 1b zugewendet, befinden sich Fertigungsstationen 22 und 23, die die Rohrenden 1b in irgendeiner Form bearbeiten. Die Rohrmatte 19 wird taktweise in Entfernungen der Teilungsabstände 6 bewegt, so daß jedes Rohrende 1b vor jede Fertigungsstation 22 oder 23 gelangt. An solchen Fertigungsstationen 22, 23 kann das Rohrende 1b entgratet, angephast, für das Aufschieben von Rohrverbindungsmuttern 26 vorbereitet werden ; das Rohrende 1b kann auch angebördelt werden, kann gebürstet oder geprüft werden. Eine besondere Fertigungsstation kann für das Biegen der Rohre 1 vorgesehen sein. Innerhalb einer solchen Fertigungslinie 21 kann auch am Anfang eine Fertigungsstation für das Abwickeln der Rohrmatte 19 von dem Bund 20 vorgesehen sein.

Hierbei können die Rohre 1 einzeln behandelt werden, indem eine Fertigungsstation als Abdrückvorrichtung 24 für das vertikale Entfernen der Gelenkglieder 12 eingerichtet ist, die selbst wieder eingesammelt und der späteren Verwendung zur Bildung neuer Rohrmatten 19 zugeführt werden.

Die Fertigungslinie 21 kann auch so gestaltet sein (Fig. 1 bis 3), daß anschließend an eine Vereinzelungsvorrichtung 5 und anschließend an eine Bereich für die Fertigungsstationen 22, 23 für das Anphasen, Entgraten, Aufschieben von Rohrverbindungsmuttern, für das Anbördeln, Bürsten oder Prüfen eine Eindrückvorrichtung 13 für das erneute Verbinden der einzelnen Rohre 1 mittels Gelenkgliedern 12 vorgesehen ist, so daß am Ende der Fertigungslinie 21 die Rohrmatte 19 wieder mittels einer Wickeltrommel 25 zu einem Bund 20 gewickelt werden kann. Das Aufwickeln und das Abwickeln der Rohrmatte 19 ist lediglich von der Gestaltung des fertigen Rohres 1 abhängig, wobei im allgemeinen davon auszugehen ist, daß ein in Rohrmatten 19 angeliefertes Rohr, das Wickelbunde 20 bildet, nur abzurollen ist, danach die Fittings bei entsprechender Vorbereitung der Rohrenden 1b einzusetzen sind und danach die Rohre 1 einzeln in einer Biegestation fertiggemacht werden. Es ist jedoch selbstverständlich möglich, zwischen den einzelnen Fertigungslinien der unterschiedlichsten Art die Rohre 1 jeweils wieder zu Rohrmatten 19 zusammenzusetzen und diese anschließend entweder flach der weiteren Verarbeitung zuzuführen oder auf Wickelbunde 20 zu geben.

Für alle Anwendungsmöglichkeiten findet eine Anpassung der Gelenkglieder 12 statt. Gemäß Fig. 4 befinden sich die Rohre 1 innerhalb einer Rohrmatte 19 auf Fertigungs-Teilungsabstand 6. Dieser Abstand wird einerseits durch den Abstand von Fertigungsstationen 22, 23 in der Fertigungslinie 21 bestimmt und andererseits durch die Rohrverbindungsmuttern 26 bzw. durch meist vorhandene Schutzkappen 27. Die Gelenkglieder 12 werden danach durch die Form des Bügels 12a insgesamt bzw. durch Klemmbackenpaare 12b, 12c zusammen mit dem Steg 12d bestimmt. Hierbei wird vorteilhafterweise Gelenkwirkung durch federnd auspreizbare Klemmbacken 12b und 12c erzielt, die eine etwas erweiterte Halbschalenform aufweisen, so daß das Außenkaliber 14 eines Rohres 1 etwas mehr als 180 Grad am Umfang umfaßt wird. Vorteilhafterweise bilden zwei Klemmbacken 12c auf ein und demselben Rohr 1 zusammen mit nur einem Klemmbacken 12b auf dem benachbarten Rohr 1 einen Bügel 12a, so daß ein Ineinandergreifen von Bügel 12a zu Bügel 12a stattfindet. Dadurch wird erheblich an Raum eingespart.

Die Anordnung der Bügel 12a gemäß Fig. 5 erfolgt weitestgehend wie zu Fig. 4 beschrieben. Unterschiedlich ist im Sinn des erwähnten Transport-Teilungsabstandes 6a die Gestaltung des etwa trapezförmigen, dünnen, elastischen (aus thermplastischen Kunststoffen hergestellten) Steges 12d. Die Ausbildung des Steges 12d, d.h. die Trapezhöhe richtet sich nach den Gegebenheiten einer Rohrmatte 19, wobei eine solche in Schichten durch eine Schichtlegestation zur Aufnahme in rechteckigen Behältern bestimmt wird. Die Rohrmatte 19 wird in solchen Fällen in hin- und hergehendem Verlauf geschichtet.

## Ansprüche

1. Verfahren zum Manipulieren von kleinkalibrigen Rohren, insbesondere von Rohren mit jeweils an den Enden befindlichen oder aufzubringenden Verdickungen, bei dem Bündel von Rohren quer angefördert und die Rohre (1) achsparallel auf einen festen Abstand (6) kontinuierlich vereinzelt werden, dadurch gekennzeichnet, daß danach jedes Rohr auf einer wandernden Unterlage (10) während der senkrecht zur Rohrachse stattfindenden kontinuierlichen Bewegung mit dem benachbarten oder mit einem entfernteren Rohr in paralleler Achslage mit wieder lösbaren Gelenkgliedern (12), deren Länge jeweils dem festgelegten Abstand entspricht, verbunden wird und daß die aus den Rohren und den Gelenkgliedern bestehende Rohrmatte kontinuierlich abgezogen wird.

2. Einrichtung zum Manipulieren von kleinkalibrigen Rohren, insbesondere von Rohren mit jeweils an den Enden befindlichen oder aufzubringenden Verdickungen, wobei eine Aufnahme (3) für zumindest ein Bündel (2) aus losen Rohren (1) vorgesehen ist, sich senkrecht zur längsachse (1a) des Bündels (2) eine Vereinzelungsvorrichtung (5) mit auf fest Teilungsabstände (6) eingestellten Vereinzelungselementen (8) anschließt, und über einer die vereinzelten Rohre (1) weitertransportierenden Unterlage (10) zumindest eine Zuführvorrichtung (11) und eine Eindrückvorrichtung (13) für eine Vielzahl von wieder lösbaren Gelenkgliedern (12) zur Bildung einer Rohrmatte (19) angeordnet sind.

3. Anwendung einer aus einzelnen kleinkalibrigen Rohren (1) mit oder ohne Rohrverschraubungen und mittels Gelenkgliedern (12) nach dem Verfahren gemäß Anspruch 1 gebildeten Rohrmatte (19), die zu einem zusammenhängenden Bund (20) aufgewickelt ist, für den Transport zu Weiterverarbeitungseinrichtungen.

4. Fertigungseinrichtung für kleinkalibrige Rohre, insbesondere für Brems-, Kraftstoff- oder Hydraulikleitungen in Kraftfahrzeugen, wobei längs einer Fertigungslinie (21), in der eine nach dem Verfahren gemäß Anspruch 1 gebildete, gerade Rohrstücke (1) aufweisende Rohrmatte (19) in gestreckter Lage geführt ist, den Rohrenden (1b) zugewendet Fertigungsstationen (22, 23) in einem Vielfachen von Teilungsabständen (6) von zumindest einem vollen Teilungsabstand (6) aufeinanderfolgender Rohre (1) angeordnet sind und die Rohrmatte (19) in Schritten der Teilungsabschnitte (6) taktweise bewegbar ist.

5. Fertigungseinrichtung nach Anspruch 4, dadurch gekennzeichnet, daß Fertigungsstationen (22, 23) für ein Anphasen der Rohrenden (1b) und-/oder für ein Entgraten der Rohrenden (1b) und/oder für ein Aufschieben von Rohrverbindungsmuttern und/oder für ein Anbördeln und/oder für ein Bürsten der Rohrenden (1b) und/oder für ein Prüfen der Rohre (1) vorgesehen sind.

6. Fertigungseinrichtung nach Anspruch 4, dadurch gekennzeichnet, daß eine Fertigungsstation (22, 23) für das Biegen der vereinzelten Rohre (1) vorgesehen ist.

7. Fertigungseinrichtung nach einem oder mehreren der Ansprüche 4 bis 6, dadurch gekennzeichnet, daß eine Fertigungsstation (22, 23) für das Abwickeln der Rohrmatte (19) von einem Bund (20) und eine Abdrückvorrichtung (24) für das Entfernen der Gelenkglieder (12) in vertikaler Richtung vorgesehen ist.

8. Einrichtung nach einem oder mehreren der Ansprüche 2 und 4 bis 7, dadurch gekennzeichnet, daß die Gelenkglieder (12) aus Leichtwerkstoffen hergestellte Bügel (12a) bilden, die entsprechend dem Fertigungs-Teilungsabstand (6) der vereinzelten Rohre (1) Klemmbackenpaare (12b, 12c) für das Rohraußenkaliber (14) aufweisen, die mittels eines dünnen, elastischen Steges (12d) miteinander verbunden sind.

9. Einrichtung nach Anspruch 2, dadurch gekennzeichnet, daß die Gelenkglieder (12) aus Leichtwerkstoff hergestellte Bügel (12a) bilden, die entsprechend einem Transport-Teilungsabstand (6a) der vereinzelten Rohre (1) Klemmbackenpaare (12b, 12c) für das Rohraußenkaliber (14) aufweisen, die mittels eines etwa trapezförmigen, dünnen, elastischen Stegs (12d) miteinander verbunden sind.

## Claims

1. Process for the manipulation of small calibre pipes, particularly of pipes with respective thickenings present at the ends or to be applied, in which bundles of pipes are transversely conveyed and the pipes (1) with parallel axes are continually segregated one by one by a fixed distance (6), characterized in that subsequently each pipe is connected to an adjacent or more distant pipe on a moving support (10) while movement is taking place perpendicularly to the pipe axis with the axes parallel, by means of removable link members (12) whose length at any time corresponds to the fixed distance, and that the pipe mat consisting of the pipes and link members is continually taken off.

2. Arrangement for the manipulation of small calibre pipes, particularly of pipes with respective thickenings present at the ends or to be applied, wherein there is provided a recipient (3) for at least one bundle (2) of loose pipes (1), a separation arrangement (5) having separation elements (8) set at fixed separation distances (6) follows perpendicularly to the longitudinal axis (1a) of the bundle (2) and in that at least one feeding arrangement (11) and one pressing-in arrangement (13) are disposed over a support (10) for transporting the separated pipes (1) at least one feeding arrangement (11) and one pressing-in arrangement (13) are arranged for a plurality of removable link members (12) for the formation of a pipe mat (19).

3. Use of a pipe mat (19) formed by means of link members (12) according to the process of Claim 1, consisting of separate small calibre pipes (1) with or without pipe connections, which is wound up into a connected coil (20), for transport to installations for further processing.

4. Production arrangement for small calibre pipes, particularly for brake, fuel or hydraulic pipes in motor vehicles, wherein along the length of a production line (21) in which a pipe mat (19) formed according to the process of Claim 1 and having straight pipes (1), is conveyed in extended position, and facing the tube ends (1b) production stations (22, 23) are disposed at a multiple of separation distances (6) of at least one full separation distance (6) of consecutive pipes (1) and the pipe mat (19) is movable rhythmically in steps of the separation distances (6).

5. Production arrangement according to Claim 4, characterized in that production stations (22, 23) are provided for chamfering of the pipe ends (1b) and/or for deburring of the pipe ends (1b) and/or for sliding on pipe connection fastenings and/or for tapping and/or brushing of the pipe ends (1b) and/or for testing of the pipes (1).

6. Production arrangement according to Claim 4, characterized in that a production station (22, 23) for bending of the separate pipes (1) is provided.

7. Production arrangement according to one or more of Claims 4 to 6, characterized in that a production station (22, 23) for uncoiling of the pipe mat (19) from a coil (20) and an ejection arrangement (24) for removal in a vertical direction of the link members (12) are provided.

8. Arrangement according to one or more of Claims 2 and 4 to 7, characterized in that the link members (12) form brackets (12a) made of light materials which are connected by means of a thin, elastic web (12d), which have clamping jaw pairs (12b, 12c) for the outside pipe calibre (14) corresponding to the production separation distance (6) of the separate pipes (1).

9. Arrangement according to Claim 2, characterized in that the link members (12) for brackets (12a) of light material which have clamping jaw pairs (12b, 12c) for the outside pipe calibre (14) according to a transport separation distance (6a) of the separate pipes (1), and which are connected by a substantially trapezoidal, thin elastic web (12d) with one another.

## Revendications

1. Procédé pour manipuler des tubes de petits calibres, notamment des tubes aux extrémités desquelles se trouvent ou doivent être rapportés des épaississements, procédé dans lequel des faisceaux de tubes sont amenés transversalement et les tubes (1) sont distribués en continu individuellement à un intervalle fixe (6) en étant parallèles les uns aux autres, procédé caractérisé en ce qu'ensuite, sur un support (10) en mouvement, chaque tube pendant le déplacement continu perpendiculaire à l'axe des tubes, est relié au tube voisin ou bien à un tube plus éloigné, dont les axes sont parallèles au sien, avec des organes d'articulation (12) susceptibles d'être à nouveau enlevés, et dont la longueur correspond respectivement à l'intervalle fixé, et en ce que la natte de tubes constituée par les tubes et les organes d'articulation est extraite en continu.

2. Dispositif pour manipuler des tubes de petits calibres, notamment des tubes aux extrémités desquelles se trouvent ou doivent être rapportés des épaississements, dispositif dans lequel il est prévu un réceptacle (3) pour au moins un faisceau (2) de tubes libres (1), tandis que perpendiculairement à l'axe longitudinal (1a) du faisceau (2) se raccorde un dispositif de distribution individuel (5) avec des éléments de distribution individuels (8) réglés à des intervalles de répartition fixes (6), tandis qu'au-dessus d'un support (10) transportant plus loin les tubes (1) distribués individuellement, il est prévu au moins un dispositif d'alimentation (11) et un dispositif de mise en place sous pressage (13) pour une pluralité d'organes d'articulation (12), susceptibles d'être enlevés à nouveau, afin de former une natte de tubes (19).

3. Mise en oeuvre d'une natte de tubes (19) constituée à partir de tubes individuels de petits calibres (1) avec ou sans vissages de tubes, et au moyen d'organes d'articulation (12) d'après le procédé selon la revendication 1, cette natte étant enroulée pour constituer une botte cohérente (20) pour le transport vers des dispositifs de traitement complémentaires.

4. Dispositif de fabrication pour des tubes de petits calibres, notamment pour des canalisations de freinage, des canalisations de carburant, ou des canalisations hydrauliques dans des véhicules automobiles, dispositif dans lequel, le long d'une ligne de fabrication (21) dans laquelle est guidée en position étendue, une natte de tubes (19) formée d'après le procédé selon la revendication 1 et comportant des tubes (1) rectilignes, les postes de fabrication (22, 23) tournés vers les extrémités de tubes (1b) sont disposés selon un multiple d'intervalles de répartition (6) de tubes (1) se succédant à au moins un intervalle de répartition complet (6), tandis que la natte de tubes (19) est susceptible d'être déplacée cycliquement en étapes correspondant à l'intervalle de répartition (6).

5. Dispositif de fabrication selon la revendication 4, caractérisé en ce qu'il est prévu des postes de fabrication (22, 23) pour une mise en phases des extrémités de tubes (1b), et/ou pour un ébavurage des extrémités des tubes (1b), et/ou pour une adjonction d'écrous de jonction de tubes, et/ou pour un sertissage et/ou pour un brossage des extrémités de tubes (1b), et/ou pour un contrôle des tubes (1).

6. Dispositif de fabrication selon la revendication 4, caractérisé en ce qu'un poste de fabrication (22, 23) est prévu pour le cintrage des tubes (1) distribués individuellement.

7. Dispositif de fabrication selon une ou plusieurs des revendications 4 à 6, caractérisé en ce qu'un poste de fabrication (22, 23) est prévu pour le déroulement de la natte de tubes (19) à partir d'une botte (20), ainsi qu'un dispositif (24) pour enlever en direction verticale les organes d'articulation (12).

8. Dispositif selon une ou plusieurs des revendications 2 et 4 à 7, caractérisé en ce que les organes d'articulation (12) sont des étriers (12a) réalisés à partir de matériaux légers, et qui comporte, de façon correspondante à l'intervalle de répartition (6) pour la fabrication des tubes (1) distribués individuellement, des paires de mâchoires de serrage (12b, 12c) pour le calibre externe (14) des tubes, ces mâchoires étant reliées entre elles par une barrette élastique mince (12d).

9. Dispositif selon la revendication 2, caractérisé en ce que les organes d'articulation (12) sont des étriers (12a) réalisés en matériaux légers, qui comportent, de façon correspondante à un intervalle de répartition (6a) pour le transport des tubes (1) distribués individuellement, des paires de mâchoires de serrage (12b, 12c) pour le calibre externe (14) des tubes, ces paires de mâchoires étant reliées ensemble au moyen d'une barrette (12d) élastique mince à peu près en forme de trapèze.

**Fig.1**

**Fig.2**

**Fig.3**

**Fig.4**

**Fig.5**